| | |
|---|---|
| (19) | Europäisches Patentamt<br>European Patent Office<br>Office européen des brevets |

(11) **EP 3 822 399 B1**

(12) **EUROPÄISCHE PATENTSCHRIFT**

(45) Veröffentlichungstag und Bekanntmachung des Hinweises auf die Patenterteilung:
**21.08.2024  Patentblatt 2024/34**

(21) Anmeldenummer: **20208270.7**

(22) Anmeldetag: **18.11.2020**

(51) Internationale Patentklassifikation (IPC):
**D03D 1/00** *(2006.01)*      **D03D 13/00** *(2006.01)*
**D03D 15/49** *(2021.01)*      **D03D 15/56** *(2021.01)*
**D03D 15/292** *(2021.01)*      **F16G 5/08** *(2006.01)*
**F16G 5/20** *(2006.01)*

(52) Gemeinsame Patentklassifikation (CPC):
**D03D 1/0094; D02G 3/447; D03D 13/008;**
**D03D 15/292; D03D 15/49; D03D 15/56;**
**F16G 1/10; F16G 1/28; F16G 5/08; F16G 5/20;**
D02G 3/32; D10B 2331/02; D10B 2331/04

(54) **ANTRIEBSRIEMEN UND VERFAHREN ZUR HERSTELLUNG EINES ANTRIEBSRIEMENS**

DRIVE BELT AND METHOD FOR PRODUCING A DRIVE BELT

COURROIE D'ENTRAÎNEMENT ET PROCÉDÉ DE FABRICATION D'UNE COURROIE D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2019   DE 102019131032**

(43) Veröffentlichungstag der Anmeldung:
**19.05.2021   Patentblatt 2021/20**

(73) Patentinhaber: **Arntz Beteiligungs GmbH & Co. KG 37671 Höxter (DE)**

(72) Erfinder:
• **Murschel, Oleg**
  **33100 Paderborn (DE)**

• **Pohl, Michael**
  **37691 Boffzen (DE)**

(74) Vertreter: **Kröncke, Rolf et al**
**Meissner Bolte**
**Patentanwälte Rechtsanwälte**
**Partnerschaft mbB**
**Plathnerstraße 3A**
**30175 Hannover (DE)**

(56) Entgegenhaltungen:
**EP-A1- 0 100 637      EP-A1- 3 139 063**
**WO-A1-2018/212018**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Processed by Luminess, 75001 PARIS (FR)

## Beschreibung

Die Erfindung betrifft einen Keilrippenriemen, der einen elastischen Grundkörper auf Basis eines Vulkanisats aufweist, wobei der Grundkörper einen Riemenrücken und eine dem Riemenrücken gegenüberliegende Kraftübertragungszone mit einem Kraftübertragungsprofil aufweist, und wobei in der Kraftübertragungszone eine Gewebeauflage aufliegt, die Kettfäden mit einem Kettfadenmassenanteil und Schussfäden mit einem Schussfadenmassenanteil aufweist, wobei die Kettfäden in Laufrichtung des Keilrippenriemens verlaufend angeordnet sind und der Schussfadenmassenanteil größer ist als der Kettfadenmassenanteil gemäß Anspruch 1. Weiterhin betrifft die Erfindung ein Verfahren zur Herstellung eines solchen Keilrippenriemen Keilrippenriemen sowie die Verwendung eines solchen Keilrippenriemens gemäß den Ansprüchen.

## Stand der Technik

Aus der EP 2 545 296 B1 ist ein Keilrippenriemen mit einer Gewebeauflage aus Kettfäden und Schussfäden bekannt, wobei die dort eingesetzte Gewebeauflage einen geringeren Schussfadenmassenanteil als Kettfadenmassenanteil aufweist.

Derartige Antriebsriemen kommen in diversen Anwendungen zum Einsatz, um mechanische Arbeit durch kinematische Koppelung von Drehbewegungen zweier oder mehrerer rotierender Maschinenelemente zwischen diesen zu übertragen. Zumeist wird der Antriebsriemen dabei über Riemenscheiben geführt, die durch den Antriebsriemen in dem genannten Sinne gekoppelt werden. Der Antriebsriemen umläuft die Riemenscheiben dabei auf ihren Mantelflächen und überträgt dort auf die Riemenscheiben tangential wirkende Antriebskräfte und Abtriebskräfte, die aufgrund des radialen Abstands der Mantelfläche von der Rotationsachse zu einem auf die Riemenscheibe wirkenden Drehmoment führen. Einsatzzwecke können etwa Riementriebe sein, wobei durch die Wahl verschiedener Radien der verwendeten Riemenscheiben Über- oder Untersetzungen realisiert werden können. Bei hinreichender Genauigkeit, insbesondere bei formschlüssigen Koppelungen zwischen einem Antriebsriemen und den Riemenscheiben, können unabhängig von oder ergänzend zu einer Über- oder Untersetzung auch Steuerzwecke realisiert werden. Typische Anwendungen sind die Ventilsteuerung bei Verbrennungsmotoren, gegebenenfalls mit Antrieb von Einspritzpumpen-Systemen, insbesondere bei Diesel-Injektoren, oder Antrieb von Lichtmaschinen und Klimaanlagen-Kompressoren in Kraftfahrzeugen. Ebenso finden sich diverse Ausgestaltungen von Antriebsriemen in Riementrieben bei Maschinen, häufig etwa zur Übertragung von mechanischer Leistung von Motoren an ein anderes Getriebe.

Die DE 691 01 598 T2 offenbart einen Gewebeüberzug für Kraftübertragungsriemen, wobei der Gewebeüberzug ein Garn mit einem Schuss in Riemenlängsrichtung aufweist. Das quer zum Schuss angeordnete Kettgarn besteht aus mehreren gezwirnten Monofilamenten. Das Verhältnis zwischen Schuss- und Kettfäden kann im Bereich 1:1 bis 2:1 liegen.

Der DE 10 2011 053 679 A1 ist ein Antriebsriemen mit einem elastischen Grundkörper auf der Basis eines Vulkanisats zu entnehmen, der eine Decklage als Riemenrücken und einen Unterbau mit einer Kraftübertragungszone aufweist. Die Kraftübertragungszone weist ein Gewebe mit texturierten Kett- und Schussfäden auf.

Die US 6,685,785 B1 betrifft einen gezahnten Antriebsriemen, bei dem die Zahnoberflächen mit einem bidirektional dehnbaren Gewebe überzogen sind. Hierzu weist das Gewebe Kett- und Schussfäden auf, die aus einem Kerngarn und einem spiralförmig um das Kerngarn gewundenen weiteren Garn gebildet werden. Durch die hiermit erreichte Dehnbarkeit des Gewebes kann die Zahngeometrie des Antriebsriemens bei der Herstellung besser beeinflusst werden.

EP 3 139 063 A1 beschreibt einen Zahnriemen mit auf den Zähnen und dem Kraftübertragungsbereich vorliegenden Gewebematerial.

Die Übertragung der Antriebskraft oder der Abtriebskraft zwischen einer Riemenscheibe und dem Antriebsriemen kann formschlüssig und/oder durch Haftreibung und/oder Gleitreibung erfolgen. Regelmäßig besteht hierbei das Problem, dass damit Geräuschentwicklungen verbunden sind, an dem Keilrippenriemen die Lebensdauer reduzierender Verschleiß auftritt und Verluste mechanischer Arbeit im Betrieb des Keilrippenriemens auftreten. Geräuschentwicklung, Verschleiß und Verluste mechanischer Energie stehen dabei regelmäßig in einem Spannungsfeld, so dass die Optimierung unter einem dieser Gesichtspunkte sich häufig unter einem anderen Gesichtspunkt nachteilig auswirkt.

## Beschreibung der Erfindung

Der Erfindung liegt die Aufgabe zugrunde, einen KeilrippenriemenKeilrippenriemen der eingangs genannten Art in seinen Eigenschaften zu verbessern, insbesondere in Bezug auf Geräuschausbildung und Verschleiß.

Die Erfindung löst die Aufgabe dadurch, dass bei einem Keilrippenriemen der eingangs genannten Art der Schussfadenmassenanteil größer als der Kettfadenmassenanteil ist, wie im Anspruch 1 beschrieben.

Der erfindungsgemäße Keilrippenriemen ist üblicherweise als Endlosriemen ausgebildet und insoweit geeignet, Riemenscheiben beliebig oft nacheinander zu umlaufen und hierdurch prinzipiell unbegrenzt lange Zeit mechanische Arbeit von einer Riemenscheibe an einer Anderen mittels des Keilrippenriemens verrichten zu lassen. In einem Bereich zwischen Riemenscheiben, über die der Keilrippenriemen geführt wird, erstreckt sich dieser nahezu gerade gestreckt und bewegt sich in diesem translatorisch. Auf eine Riemenscheibe auflaufend wird der Keilrippenriemen in tangentialer Richtung um die Riemenscheibe geführt und bewegt sich auf einer Kreisbahn, soweit die Riemenscheibe kreisförmig ist. Der Keilrippenriemen bewegt sich somit während der Umlenkung um eine Riemenscheibe entlang der Laufrichtung translatorisch mit der Mantelfläche der Riemenscheibe mit, bei gleichzeitiger Drehung.

Der Keilrippenriemen weist einen Grundkörper oder Riemenkörper auf, der elastisch ausgebildet ist und dem Keilrippenriemen im Wesentlichen seine Formbeständigkeit und Gestalt gibt. Auf einer ersten Seite des Keilrippenriemens weist dieser einen Riemenrücken auf. Auf der dem Riemenrücken in Bezug auf den Grundkörper gegenüberliegenden zweiten Seite weist der Keilrippenriemen eine Kraftübertragungszone auf. Die Kraftübertragungszone ist hierbei zum Übertragen von Kräften zwischen der Mantelfläche einer Riemenscheibe und dem Keilrippenriemen eingerichtet.

Die Übertragung der Kraft kann hierbei durch Haftreibung zwischen der Kraftübertragungszone und einer Mantelfläche einer Riemenscheibe erfolgen. Hierbei resultiert aus der Normalkraft zwischen der Oberfläche der Kraftübertragungszone und der Oberfläche einer Riemenscheibe eine reibkraftschlüssige Verbindung. Die Normalkraft kann sich sowohl durch die Zugkräfte, die mittels des Keilrippenriemens übertragen werden, also auch aus einer ergänzenden Vorspannung des Keilrippenriemens durch eine Spannrolle oder aus einer Kombination von beidem ergeben. Die Kraftübertragungszone ist hierbei mit einer in Laufrichtung im Querschnittsprofil gleichbleibenden Rippenstruktur (wie beim Keilrippenriemen) ausgebildet.

Alternativ oder zusätzlich kann allgemein die Übertragung der Kraft durch einen Formschluss zwischen der Kraftübertragungszone und einer Mantelfläche einer Riemenscheibe erfolgen. Dies kann beispielsweise durch Erhebungen in der Kraftübertragungszone erzielt werden, die entlang der Laufrichtung des Antriebsriemens wiederholt vorhanden sind und dazu eingerichtet sind, um in korrespondierend angeordnete Ausnehmungen in einer Riemenscheibe einzugreifen. Etwa bei einem als Zahnriemen ausgebildeten Antriebsriemen sind die Erhebungen als quer zur Laufrichtung erstreckende Balken ausgebildet, die aus der Kraftübertragungszone entlang der Laufrichtung in festen Abständen wiederholt erhaben hervorstehen und dazu eingerichtet sind, um in Nuten der Riemenscheiben einzugreifen, die in entsprechend gleichen Abständen entlang der Mantelfläche einer Riemenscheibe eingebracht sind. Alternativ kann die Kraftübertragungszone Ausnehmungen aufweisen, zu denen an einer Riemenscheibe korrespondierende Erhebungen vorhanden sind, so dass die Erhebungen in die Ausnehmungen eingreifen. Über diese gängige Grundform hinaus sind jedoch alle weiteren denkbaren geometrischen Ausgestaltungen, die zum Herstellen einer Verbindung mittels Formschluss zwischen einem Antriebsriemen und einer Riemenscheibe infrage kommen, geeignet.

Die Elastizität des Grundkörpers erlaubt vorteilhafterweise, dass der Antriebsriemen dem gekrümmten Verlauf der Mantelflächen von Riemenscheiben durch eigene Verformung wiederholt folgen kann, ohne aufgrund der wiederkehrenden Biegungsvorgänge zerstört zu werden. So erfolgt, wenn der Antriebsriemen auf eine Riemenscheibe aufläuft, eine Stauchung des elastischen Grundkörpers auf der Innenseite der entstehenden Krümmung des Antriebsriemens, also in der Nähe der Mantelfläche der Riemenscheibe, wobei auf der Riemenscheibe abgewandten Seite der Grundkörper durch Dehnung gelängt wird. Mit Ablaufen von einer Riemenscheibe sind diese Vorgänge aufgrund der Elastizität reversibel. Selbiges trifft umgekehrt zu, wenn der Antriebsriemen mit dem Riemenrücken über eine Spannrolle geführt wird. Der Begriff der Elastizität ist insoweit festkörpermechanisch so zu verstehen, dass der Antriebsriemen nahezu beliebig häufig über zweckbestimmt ausgelegte Riemenscheiben geführt werden kann, ohne dass es bei ihm zu einem allein dehnungsbedingten Versagen, etwa aufgrund Ermüdung wegen Biegewechselbeanspruchung, kommt.

Der Grundkörper ist erfindungsgemäß auf Basis eines Vulkanisats hergestellt. Hierdurch werden einerseits die vorgenannten Vorteile der Elastizität verwirklicht. Das Vulkanisat weist hierbei eine vulkanisierte Kautschukmischung auf. Die Kautschukmischung weist wenigstens eine oder mehrere Kautschukkomponenten und ein oder mehrere Mischungsingredienzien auf. Die Kautschukkomponente oder die mehreren Kautschukkomponenten ist bzw. sind ausgewählt aus der Gruppe von Kautschukkomponenten, die insbesondere Ethylen-Propylen-Mischpolymerisat (EPM), ein Ethylen-Propylen-Dien-Mischpolymerisat (EPDM), (teil)hydrierter Nitrilkautschuk (HNBR), Chloropren-Kautschuk (CR), Fluor-Kautschuk (FKM), Naturkautschuk (NR), Styrol-Butadien-Kautschuk (SBR) oder Butadien-Kautschuk (BR) umfasst. Die Mischungsingredienzien umfassen einen oder mehrere Vernetzer oder ein Vernetzersystem aus Vernetzer und Beschleuniger, die jeweils die Vulkanisation der Kautschukkomponenten initiieren und/oder beschleunigen. Als weitere Mischungsingredienzien können (als nicht abschließende Aufzählung) ein oder mehrere Füllstoffe, ein oder mehrere Verarbeitungshilfsmittel und/oder ein oder mehrere Weichmacher und/oder ein oder mehrere Alterungsschutzzusätze und/oder Fasermaterial und/oder Farbpigmente enthalten sein.

Der Grundkörper kann zudem eine übliche Zugträgerschicht mit Zugträgern aufweisen. Entsprechende geeignete Materialien und Anordnungen sind dem Fachmann bekannt.

Die Kraftübertragungszone weist die erfindungsgemäße Gewebeauflage auf. Die Gewebeauflage liegt hierbei auf dem Grundkörper auf. Die Gewebeauflage ist hierbei bevorzugt entlang ihrer Gewebedicke, mit der sie auf dem Grundkörper aufliegt, zumindest teilweise nicht in das Vulkanisat eingebettet. Mit einem nicht in das Vulkanisat eingebetteten Anteil ihrer Gewebedicke bedeckt die Gewebeauflage das Vulkanisat im Bereich der Kraftübertragungszone somit. Der Grundkörper wird im Bereich der Kraftübertragungszone durch die Gewebeauflage, insbesondere durch den nicht in das Vulkanisat eingebetteten Anteil der Gewebeauflage, räumlich begrenzt. In der Kraftübertragungszone bildet die Gewebeauflage somit zumindest teilweise die Oberfläche aus. Insbesondere ist die Kraftübertragungszone dazu eingerichtet, dass beim zweckbestimmten Umlaufen von Riemenscheiben die Gewebeauflage mit den Riemenscheiben die eigentliche Kraftübertragung bewerkstelligt, insbesondere durch reib- und/oder haftkraftschlüssige und/oder formschlüssige Wechselwirkung zwischen der Gewebeauflage des Antriebsriemens und der Mantelfläche der Riemenscheibe.

Eine solche Gewebeauflage hat bei einem Antriebsriemen den Vorteil, dass eine Reduzierung von Geräuschentwicklung, Verschleiß und Reibungswiderstand bei der Umlenkung des Antriebsriemens über Riemenscheiben erzielt wird im Verhältnis zu Antriebsriemen ohne eine solche Gewebeauflage. Insbesondere hat sich gezeigt, dass die Vermeidung von direktem Kontakt des Vulkanisats mit der Mantelfläche einer umlaufenen Riemenscheibe zumeist einen vorteilhaften Beitrag zur Reduktion von Geräuschentwicklung, der Reibungsverluste und des Verschleißes leistet.

Die Gewebeauflage ist im textiltechnischen Sinne ein textiles Flächengebilde aus den Fadensystemen Kette und Schuss. Das Fadensystem Kette weist Kettfäden auf. Das Fadensystem Schuss weist Schussfäden auf. Die Kettfäden erstrecken sich hierbei in Längsrichtung der Gewebeauflage. Die Schussfäden erstrecken sich quer zu den Kettfäden und somit in Querrichtung der Gewebeauflage.

Die Gewebeauflage kann zum Beispiel eine sein mit einer Leinwandbindung, einer Köperbindung oder einer Atlasbindung. In Abhängigkeit von der Bindung und dem entsprechenden Gewebe ist die Flottung ausgebildet. Die Einarbeitung der Fäden bei den genannten Bindungen kann genutzt werden den Masseanteil der Fäden zu ändern. D. h., bei Schussfäden kann die Einarbeitung die Masseanteile verändern, gleiches gilt für Kettfäden. Unter Einarbeitung wird die Verkürzung eines Fadens (Kett- oder Schussfaden) vom ursprünglichen gestreckten Zustand in den in das Gewebe eingearbeiteten endgültigen, wellenartigen Zustand verstanden. Die Einarbeitung wird als Prozentwert angegeben, d. h., die Einarbeitung in Prozent ist der Wert aus gestreckter Länge minus Länge im Gewebe geteilt durch die gestreckte Länge, dieser Wert wird multipliziert mit 100. Einarbeitungswerte für die Schussfäden liegen in einem Bereich von 10% bis 50 %, wie 20 % bis 30 %. Nach weiteren Behandlungsschritten des Gewebes, wie einem Wasch- und Fixierprozess kann der Wert der Einarbeitung ein Vielfaches von den oben genannten Werten sein, beispielsweise 50-150%, insbesondere 90-120%. Im zur Verwendung bei dem erfindungsgemäßen Keilrippenriemen fertigen Gewebe ist in einer Ausführungsform der Wert der Einarbeitung für die Schussfäden zwei bis viermal so hoch wie der Wert der Einarbeitung für die Kettfäden.

In einer Ausführungsform kann vor dem Wasch- und Fixierprozess der Wert der Einarbeitung für die Kettfäden, abhängig von der Feinheit der Schussfäden, wie bei den Schussfäden zwischen 10-50% betragen. Nach dem Wasch- und Fixierprozess ist der Wert der Einarbeitung für die Kettfäden nahezu unverändert.

Bei dem erfindungsgemäßen Keilrippenriemen sind die Kettfäden in Laufrichtung des Keilrippenriemens verlaufend angeordnet. Dementsprechend sind die Schussfäden quer zu der Laufrichtung des Keilrippenriemens angeordnet. Dies bedeutet, dass die Kettfäden der Gewebeauflage beim Umlaufen einer Riemenscheibe in tangentialer Richtung der Riemenscheibe um diese herum verlaufen. Die Schussfäden verlaufen dabei in axialer Richtung einer solchen umlaufenden Riemenscheibe.

Die erfindungsgemäße Gewebeauflage umfasst zumindest teilweise texturierte Kettfäden und Schussfäden. Dabei wird unter dem Ausdruck "teilweise texturiert" verstanden, dass im Falle von Umwindezwirnen z.B. das Polyamid texturiert vorliegt, während der Kern, z.B. aus Polyurethan, untexturiert ist. Bei einem Umwirbelungszwirn kann z.B. das Polyester texturiert sein und der Kern aus Polyruethan nicht. In einer Ausführungsform können auch Beide texturiert sein. In einer weiteren Ausführungsform sind Kettfäden und Schussfäden teiltexturiert. Weiterhin kann ein Teil der Kettfäden und/oder Schussfäden texturiert sein, während ein anderer Teil nicht texturiert. In einer Ausführungsform sind sowohl Kettfäden als auch Schussfäden texturiert. Texturiert bedeutet in diesem textiltechnischen Zusammenhang, dass die texturierten Fäden eine Kräuselstruktur aufweisen. Die Texturierung von Kettfäden und Schussfäden führt zu einer erheblich gesteigerten Bauschigkeit derselben bezogen auf untexturierte Fäden. Zudem ist durch die Texturierung eine erheblich größere Elastizität, insbesondere Reißdehnung, der Kettfäden und Schussfäden erzielbar.

Der Kettfadenmassenanteil ist der Anteil an Masse von Kettfäden an der Gesamtmasse von Kettfäden und Schussfäden in der Gewebeauflage. Der Schussfadenmassenanteil ist der Anteil an Masse von Schussfäden an der Gesamtmasse von Kettfäden und Schussfäden in der Gewebeauflage. In einer konkreten Gewebeauflage beträgt somit die Summe aus dem Kettfadenmassenanteil und dem Schussfadenmassenanteil 100 %.

In einer Weiterbildung ist vorgesehen, dass der Schussfadenmassenanteil wenigstens 52 % und der Kettfadenmassenanteil höchstens 48 % beträgt. Vorzugsweise beträgt der Schussfadenmassenanteil wenigstens 54 % und der Kettfadenmassenanteil höchstens 46 %. Weiter vorzugsweise beträgt der Schussfadenmassenanteil wenigstens 55 % und der Kettfadenmassenanteil höchstens 45 %. Insbesondere beträgt der Schussfadenmassenanteil 56 % und der Kettfadenmassenanteil 44 %.

Die Wechselwirkungen zwischen den vorstehend genannten Einflussgrößen auf die Eigenschaften eines Antriebsriemens, insbesondere den Reibungswiderstand, die Geräuschentwicklung und die Lebensdauer, sind oft nichtlinear und häufig nicht zielführend superponierbar. In der Regel sind vorteilhafte Kombinationen der beeinflussenden Parameter für die Eigenschaften eines Antriebsriemens mit Empirie zu ermitteln.

Ein überraschender Vorteil des erfindungsgemäßen Keilrippenriemens besteht gegenüber vorbekannten Keilrippenriemen darin, dass die erfindungsgemäße Gewebeauflage im Bereich der Kraftübertragungszone vorteilhaft zu einer Reduzierung der Geräuschentwicklung, zur Reduzierung der Reibung zwischen der Kraftübertragungszone und einer Riemenscheibe und zu einer hohen Lebensdauer eines erfindungsgemäßen Keilrippenriemens führt.

In einer Weiterbildung der Erfindung ist die Gewebeauflage in Kettrichtung und in Schussrichtung elastisch ausgebildet. Die Elastizität führt zu einer vorteilhaften Verformbarkeit im Betrieb des Keilrippenriemens, insbesondere beim Umlaufen einer Riemenscheibe. Die Reißdehnung in Kettrichtung beträgt hierbei wenigstens 110 %. Die Reißdehnung in Schussrichtung beträgt wenigstens 190 %. Die (dimensionslose) Reißdehnung (Formelzeichen $\varepsilon_R$) ist hierbei in einem Längenabschnitt eines Fadens, insbesondere eines Kettfadens oder eines Schussfadens, mit einer ursprünglichen Fadenabschnittslänge (Formelzeichn $l_0$) die auf diese ursprüngliche absolute Fadenabschnittslänge normierte Längung um einen absoluten Längungsbetrag (Formelzeichen $l_R$) entsprechend dem formelmäßigen Ausdruck

$$\varepsilon_R = \frac{l_R}{l_0}$$

bei welchem der Faden dehnungsbedingt reißt. Gemäß der Erfindung ist ein Teil der Kettfäden oder sind alle Kettfäden als Umwindezwirn mit einem elastischen Kerngarn, insbesondere aufweisend oder bestehend aus Polyurethan, und einem um dieses herum gewundenen texturierten Hüllgarn, insbesondere aufweisend oder bestehend aus Polyamid, ausgebildet. Dies hat sich als vorteilhaft für eine Geräuschminderung, Reibungsminderung und Verschleißminderung des Keilrippenriemens beim Umlaufen von Riemenscheiben herausgestellt.

In einer alternativen Ausführungsform ist ein Teil der Kettfäden oder sind alle Kettfäden als Umwirbelungsgarne ausgebildet mit einem elastischen Kerngarn, insbesondere aufweisend oder bestehend aus Polyurethan, und umwirbelten texturierten Filamenten, insbesondere aufweisend oder bestehend aus Polyester. Insbesondere, wenn der Kettfaden und/oder Schussfaden zumindest teilweise texturiert ist, z.B. wenn der Umwindezwirn oder Umwirbelungsgarn texturiert ist und der Kern nicht texturiert ist.

Gemäß der Erfindung sind ein Teil der Schussfäden oder alle Schussfäden als Umwirbelungsgarn mit einem elastischen Kerngarn, insbesondere aufweisend oder bestehend aus Polyurethan, und einem oder mehreren um dieses herum umwirbelten texturierten Filamenten, insbesondere aufweisend oder bestehend aus Polyester, ausgebildet. Dies hat sich als vorteilhaft für eine Geräuschminderung, Reibungsminderung und Verschleißminderung des Keilrippenriemens beim Umlaufen von Riemenscheiben herausgestellt. Der Schussfaden kann alternativ ein Umwindezwirn wie oben beschrieben sein, wenn der Kettfaden und/oder Schussfaden zumindest teilweise texturiert ist, z.B. wenn der Umwindezwirn oder Umwirbelungsgarn texturiert ist und der Kern nicht texturiert ist.

Gemäß der Erfindung weist die Gewebeauflage ein Flächengewicht von mindestens 250 g/m² und von höchstens 1000 g/m², wie von mindestens 300 g/m² und von höchstens 500 g/m², insbesondere von 350 g/m² auf. Das Flächengewicht ist hierbei die auf die zweidimensionale Oberfläche des Gewebes bezogene Masse des Gewebes. Mit Flächengewichten in diesem Bereich kann eine Reduzierung der Geräuschentwicklung, der Reibung und des Verschleißes weiter verbessert werden.

Das Flächengewicht kann dabei unterschiedlich gewählt werden, indem die Feinheit der Kettfäden und/oder die Feinheit der Schussfäden und/oder die Fadendichte des Gewebes unterschiedlich gewählt werden. Die Feinheit ist hierbei das textiltechnische Maß für den Durchmesser eines Fadens (Einheit z.B. Tex im Tex-System gemäß ISO 1144 und DIN 60905, Teil 1). Eine Erhöhung der Feinheit von Fäden leistet einen Beitrag zu einem höheren Flächengewicht, entsprechend leistet eine Verringerung der Feinheit einen Beitrag zu einem geringeren Flächengewicht. Die Fadendichte ist die Anzahl der Fäden pro Längeneinheit in einem Gewebe (Einheit: Fäden/cm) und gibt an, wie viele Fäden ein Gewebe in einem Längenabschnitt aufweist. Durch Wahl einer geeigneten Kombination aus Feinheit der Kettfäden, Feinheit der Schussfäden, Fadendichte der Kettfäden und Fadendichte der Schussfäden kann das Flächengewicht gewählt werden. Ein identisches Flächengewicht kann zudem erreicht werden, wenn die Feinheit von Fäden und deren Fadendichte korrespondierend so geändert werden, dass eine geringere Feinheit durch eine geringere Fadendichte bezüglich des Flächengewichts gerade ausgleichen. Auch kann unter Beibehaltung des Flächengewichts beispielsweise bei einigen Fäden, beispielsweise bei den Kettfäden, deren Feinheit reduziert, deren Fadendichte beibehalten und zum Ausgleich die Fadendichte der Schussfäden reduziert werden. Einen weiteren Beitrag leistet das Material der Fäden selbst. Durch geeignete Wahl der Feinheiten, Fadendichten und des Materials für die Gewebeauflage lassen sich die Gewebeeigenschaften wie beispielsweise Bezugsdehnung und Reißfestigkeit einstellen. Insbesondere kann durch den hierin beschriebenen Wasch- und anschließenden Fixierprozess das Flächengewicht eingestellt werden. Bei diesen o.g. Prozessen schrumpft das Gewebe und das Flächengewicht erhöht sich dadurch.

In einer Weiterbildung der Erfindung beträgt die Bezugsdehnungen der Gewebeauflage in Kettrichtung bei einer Zugkraft von 20 Newton mindestens 16 %, und die Bezugsdehnung der Gewebeauflage in Schussrichtung beträgt bei einer Zugkraft von 20 Newton mindestens 73 %. Durch diese Mindestwerte wird eine Reduzierung der Geräuschentwicklung, der Reibung und des Verschleißes weiter verbessert.

In einer Weiterbildung der Erfindung ist die Gewebeauflage ohne einen Haftvermittler, insbesondere ohne Einsatz von Resorcin-Formaldehyd-Latex, mit dem Vulkanisat in kraftübertragender Weise verbunden. Die Verbindung ohne Haftvermittler hat sich bei dem erfindungsgemäßen Keilrippenriemen als vorteilhaft für eine Reduzierung der Geräuschentwicklung, der Reibung und des Verschleißes erwiesen.

In einer Ausgestaltung dieser Weiterbildung erstreckt sich das Vulkanisat durch einen Teil der Dicke der Gewebeauflage hindurch. Hierdurch wird eine zuverlässige kraftübertragende Verbindung zwischen dem Vulkanisat und der Gewebeauflage erzielt.

Alternativ oder zusätzlich sind Filamente der Gewebeauflage auf der dem Grundkörper abgewandten Seite von dem Vulkanisat hinterflossen. Hierdurch wird eine formschlüssige Verbindung zwischen dem Vulkanisat und den davon hinterflossenen Filamenten erzielt. Das Vulkanisat kann sich dabei ganz oder teilweise um die derart hinterflossenen Filamente herum erstrecken, also im Querschnitt eines hinterflossenen Filaments dessen Querschnittsgeometrie ganz oder teilweise umgreifen. Hierdurch ist das Vulkanisat mit Filamenten der Gewebeauflage in kraftübertragender Weise verbunden. Die Hinterfließung kann beispielsweise derart ausgebildet sein, wie sie durch Zusammenpressen einer erfindungsgemäßen Gewebeauflage mit einer Kautschukmischung derart, dass ein Teil der Kautschukmischung nur einen Teil der Dicke der Gewebeauflage durchdringt, mit anschließender Vulkanisation der Kautschukmischung, erhältlich ist. Hierdurch wird ein vorteilhafter Beitrag zur Reduzierung der Geräuschentwicklung, der Reibung und des Verschleißes beim Betreiben des Keilrippenriemens erzielt.

Gemäß der Erfindung ist der Keilrippenriemen ein Keilrippenriemen. Bei einer Ausgestaltung als Keilrippenriemen verwirklichen sich die vorstehenden Vorteile besonders ausgeprägt im Verhältnis zu Keilrippenriemen des Standes der Technik ohne derartige Ausgestaltungen.

Die Erfindung löst die Aufgabe auch durch ein Verfahren zur Herstellung eines solchen Keilrippenriemens gemäß Anspruch 10, wobei eine zur Herstellung des Keilrippenriemens eingerichtete Vulkanisierform einen Profilbereich mit wenigstens einer Profilwandung zur Formung des Kraftübertragungsprofils des Keilrippenriemens aufweist, mit den folgenden Schritten:

a) Anordnen eines Geweberohlings (6) in der Vulkanisierform (1) an dem Profilbereich (7) derart, dass Kettfäden (8) des Geweberohlings in Laufrichtung des herzustellenden Keilrippenriemens (2) verlaufend orientiert sind, wobei der Geweberohling (6) die Kettfäden (8), insbesondere die texturierten Kettfäden (8), mit einem Kettfadenmassenanteil, Schussfäden (9), insbesondere texturierte Schussfäden (9), mit einem Schussfadenmassenanteil, der größer als der Kettfadenmassenanteil ist, und ein Teil der Kettfäden (8) oder alle Kettfäden (8) als Umwindezwirn mit einem elastischen Kettgarn und einen um dieses herumgewundenen texturierten Hüllgarn ausgebildet sind, einen Teil der Schussfäden (9) oder alle Schussfäden (9) als Umwicklungsgarn mit einem elastischen Kerngarn und einer oder mehrere um dieses herumgewirbelten texturierten Filamenten ausgebildet sind, wobei die Gewebeauflage (12) ein Flächengewicht von mindestens 250 / $m^2$ und von höchsten 1.000 / $m^2$ aufweist,

b) Einbringen eines Riemenwickels (11) in die Vulkanisierungsform auf der der Profilwandung (5) abgewandten Seite des Geweberohlings (6) und Druckbeaufschlagung des Riemenwickels (11) mittels eines Formgebungsdruckes derart, dass der Geweberohling (6) an die wenigstens eine Profilwandung (5) angepresst wird, der Geweberohling sich dabei an die Profilwandung (5) durch Dehnung wenigstens einer seiner Kettfäden (8) und durch Dehnung wenigstens einiger oder aller Schussfäden (9) angepasst und die Profilwandung auskleidet mit sich anschließender Vulkanisierung der Kautschukmittel der Kautschukmischung im Riemenwickel (11),

oder

alternativ mit den folgenden Schritten:

a') Anordnen eines Riemenwickels (11) mit einem Geweberohling (6) als eine äußere Schicht des Riemenwickels (11), wobei die Anordnung derart ist, dass der Geweberohling (6) an dem Profilbereich (7) angeordnet ist derart, dass Kettfäden (8) des Geweberohlings in Laufrichtung des herzustellenden Keilrippenriemens (2) verlaufend orientiert sind, wobei der Geweberohling (6) die Kettfäden (8), insbesondere die texturierten Kettfäden (8) mit einem Kettfadenmassenanteil, Schussfäden (9), insbesondere texturierte Schussfäden (9), mit einem Schussfadenmassenanteil der größer als der Kettfadenmassenanteil ist, aufweist und

b') anschließendem Formgeben durch Druckbeaufschlagung mit sich daran anschließender Vulkanisierung des Riemenwickels.

Bei dem Herstellungsprozess findet zu Beginn eine Erwärmung und eine Druckbeaufschlagung statt. Diese bewirkt ein Erweichen der Kautschuckmischung und damit ein Einformen dieser. Anschließend wird der Vulkanisierungsvorgang gestartet.

In einer Ausführungsform werden dabei entsprechende Zugträger z.B. als Zugträgerschicht eingebracht, vorzugsweise Zugträger aus Synthesefasern, wie Polyester oder Aramid, wobei die Zugstränge vorzugsweise aus gezwirnten und ungezwirnten Cordsträngen gebildet werden.

Nach Einbringen des Geweberohlings kann insgesamt ein Konfektionswickel, auch als Riemenwickel bezeichnet, in die Vulkanisierungsform eingebracht werden. Dieser Riemenwickel kann dabei den folgenden Aufbau aufzeigen: Eine Rückenschicht, auch als Decklage oder Deckplatte bezeichnet, aus einem zu einem Elastomer härtbaren Material, vorzugsweise einem Kautschuk oder Synthesekautschuk, vorzugsweise einem Elastomer auf EPDM-Basis und/oder eine der oben genannten Materialien in Bezug auf den Grundkörper der Kernschicht. Eine Zugträgerschicht, vorzugsweise mit Zugträgern aus Synthesefasern, wie Polyester oder Aramid, wobei die Zugstränge vorzugsweise aus gezwirnten oder ungezwirnten Cordsträngen gebildet werden. Eine Kernschicht für die Ausbildung eines Unterbaus, auch als Kompressionszone oder Kern bezeichnet, zur Ausbildung der Kraftübertragungszone, vorzugsweise gebildet aus M-Elastomer, CR-Kautschuk oder Neopren, besonders bevorzugt EPDM sowie entsprechende Mischungen hiervon. Dabei kann das Material der Kernschicht identisch sein mit der Rückenschicht. In einer Ausführungsform ist das Elastomermaterial für den Riemenkörper auch als Grundkörper bezeichnet einheitlich. Bei einem Aufbau wie oben beschrieben, wird also in diesem Fall dasselbe Riemenelastomer für den Unterbau wie für den Riemenrücken verwendet. Die Riemenrücken können eine Textilauflage, eine poröse Beschichtung oder eine sonstige Auflage tragen.

Die Profilform kann beispielsweise zur Herstellung des Keilrippenriemens als Endlosriemen als ringförmige Vulkanisierform ausgebildet sein. Der Profilbereich ist dabei zur Ausformung der Kraftübertragungszone ausgebildet.

Zur Herstellung des Keilrippenriemens als Endlosriemen kann der Profilbereich in der ringförmigen Vulkanisierform in einer ersten Variante radial nach außen orientiert sein. In diesem Fall ist dem Profilbereich gegenüberliegend eine Rückenwandung der Vulkanisierform angeordnet, die radial nach innen orientiert ist, also zu dem Profilbereich hin orientiert. Die Rückenwandung ist zur Ausformung des Riemenrückens eingerichtet. Der Profilbereich und die Rückenwandung bilden einen Ringspalt in der Vulkanisierform, die der Geometrie des herzustellenden Keilrippenriemens entspricht, bei dem die Kraftübertragungszone nach innen weisend orientiert ist.

In einer zweiten Variante kann der Profilbereich der Vulkanisierform radial nach innen orientiert sein und die Rückenwandung der Vulkanisierform radial nach außen orientiert sein. Der hierdurch gebildete Ringspalt ist geeignet, einen Keilrippenriemen mit nach außen weisender Kraftübertragungszone herzustellen.

In den Varianten wird der Ringspalt in der Vulkanisierform zudem in axialer Richtung durch Wandungen begrenzt.

In einer ersten Ausführungsform des erfindungsgemäßen Verfahrens wird in dem ersten Schritt a) der Geweberohling in die Vulkanisierform eingelegt mit einer Orientierung, bei der die Kettfäden in Laufrichtung des herzustellenden Keilrippenriemens verlaufend ausgerichtet sind. Für einen ringförmigen Keilrippenriemen wird somit die Kettrichtung des Geweberohlings tangential in der Vulkanisierform verlaufend an dem Profilbereich angeordnet.

Anschließend werden gemäß bekannter Verfahren die weiteren Bestandteile in das Vulkanisiersystem eingebracht z.B. Zugträger etc. als Riemenwickel oder Konfektionswickel.

In dem folgenden Schritt b) wird auf der der Profilwandung abgewandten Seite eine Kautschukmischung z.B. als Bestandteil des Riemenwickels an den Geweberohling druckbeaufschlagt. Der Formgebungsdruck presst die Kautschukmischung und damit die Gewebeauflage an die Profilwandung der Vulkanisierform. Der Geweberohling dehnt sich durch den Formgebungsdruck derart, dass er den Konturen der Profilwandung angepasst wird. Hierbei können sich die Kettfäden und/oder die Schussfäden dehnen. Im Ergebnis ist die Profilwandung durch das gedehnte Gewebe des Geweberohlings ausgekleidet und bildet die Gewebeauflage für den Keilrippenriemen.

Anschließend wird die Kautschukmischung vulkanisiert, beispielsweise durch Einstellung der die Vulkanisation initiierenden und/oder beschleunigenden Reaktionsparameter wie Vulkanisationstemperatur und Vulkanisationsdruck. Hierdurch wird die Kautschukmischung in das Vulkanisat gewandelt. Dieser Schritt kann sich im Zeitverlauf mit Schritt b) überschneiden.

Zum Beispiel kann das Verfahren zur Herstellung des Keilrippenriemens ein Formverfahren sein, das ein Einbringen eines üblichen Riemenwickels mit einem Aufbau, wie oben beschrieben.

In einer weiteren Ausführungsform des erfindungsgemäßen Verfahrens kann der Riemenwickel bereits den Geweberohling, wie er erfindungsgemäß verwendet wird, umfassen. Das heißt, ein Riemenwickel der als eine äußere Schicht einen Geweberohling aufweist, wo die Kettfäden mit einem Kettfadenmassenanteil und Schussfäden mit einem Schussfadenmassenanteil vorliegen, wobei die Kettfäden in einer Laufrichtung des Keilrippenriemens verlaufen angeordnet sind und der Schussfadenmassenanteil größer als der Kettfadenmassenanteil ist.

In einer Weiterbildung des erfindungsgemäßen Verfahrens beträgt die Kraft zur Bereitstellung des Formgebungsdrucks in Schritt b) wenigstens 10 bar und höchstens 25 bar. Hierdurch werden vorteilhafte Eigenschaften des Vulkanisats in Kombination mit einer vorteilhaften Eindringtiefe des Vulkanisats in die Gewebeauflage erzielt. Insbesondere durchdringt die Kautschukmischung die Gewebeauflage nicht vollständig durch deren Dicke hindurch, sondern allenfalls teilweise für ein Erzeugen einer kraftübertragenden Verbindung zwischen dem Vulkanisat und der Gewebeauflage. Hierdurch wird eine Reduzierung von Geräuschentwicklung, von Reibung und von Verschleiß des Keilrippenriemens erreicht.

In einer Weiterbildung des erfindungsgemäßen Verfahrens wird die Vulkanisation bei einer Vulkanisationstemperatur von wenigstens 120 °C und höchstens 220 °C durchgeführt, insbesondere bei einer Vulkanisationstemperatur von 180°C. Hierdurch werden vorteilhafte Eigenschaften des Vulkanisats in Kombination mit einer vorteilhaften Eindringtiefe des Vulkanisats in die Gewebeauflage erzielt. Hierdurch wird eine Reduzierung von Geräuschentwicklung, von Reibung und von Verschleiß des Keilrippenriemens erreicht.

In einer Weiterbildung des erfindungsgemäßen Verfahrens wird vor dem Schritt a) ein Ausrüstungsschritt durchgeführt. Der Ausrüstungsschritt kann dabei mehrere Prozesse umfassen. In dem Ausrüstungsschritt wird zunächst ein Waschprozess durchgeführt. Bei diesem Waschprozess wird ein Gewebekörper, aus dem der Geweberohling anschließend hergestellt wird oder der den Geweberohling bereits bildet, nass gewaschen. Insbesondere wird der Geweberohling beim nassen Waschen von Avivagen, Gleitmittel, Spulöl, Schäröl und/oder Bondierungsmittel befreit. Der Waschprozess hat den Vorteil, dass der aus dem gewaschenen Gewebekörper hergestellte Geweberohling in einem erfindungsgemäßen Keilrippenriemen vorteilhaft zur Reduzierung von Geräuschentwicklung und Reibung beim Betrieb des Keilrippenriemens und zu einer hohen Lebensdauer führt. Durch den Waschprozess kann die Elastizität, das Flächengewicht und das Verhältnis von Kettfadenmassenanteil zu Schussfadenmassenanteil eingestellt werden. Der Waschprozess als Nassprozess verbessert die Dehnungsergebnisse. Insbesondere die bei der Herstellung des Geweberohlings auftretenden Beschränkungen der Elastizität werden durch den Waschprozess wieder egalisiert.

In einer Ausgestaltung dieser Weiterbildung umfasst der Ausrüstungsschritt einen Fixierprozess. Der Fixierprozess erfolgt hierbei nach dem Waschprozess. Durch den Fixierprozess wird der Gewebekörper fixiert, um die Elastizität, das Flächengewicht und das Verhältnis von Kette zu Schuss beizubehalten. Hierdurch wird die Reduzierung von Geräuschentwicklung, Reibung und Verschleiß bei einem Keilrippenriemen weiter verbessert.

Die Fixierung verhindert ein unkontrolliertes Einspringen der Ware. Das heißt, ohne Fixierung ist die Möglichkeit größer, dass unterschiedliche Gewebebreiten auftreten und eine unterschiedliche Verteilung der Kett- und Schussgarne auftritt, sodass die Massenanteile von Kette und Schussfaden in unterschiedlichen Bereichen unterschiedlich ausgebildet sind. Dieses kann als Konsequenz Auswirkungen auf die Dehnungswerte und die Gewichte über die Gewebebreite haben und somit nicht zu einem möglichst homogenen Gewebe führen.

Durch den Nassprozess und den sich anschließenden Fixierprozess kann eine verbesserte Homogenisierung des Geweberohlings sowohl hinsichtlich maximaler Bezugsdehnung Schuss als auch definierter Bezugsdehnung Kette erreicht werden.

Nach Beendigung des Vulkanisationsschritts ist der Keilrippenriemen aus der Vulkanisationsform entnehmbar. Die Vulkanisationsform ist hierzu üblicherweise mehrteilig ausgeführt. Alternativ zur Herstellung einen einzelnen Keilrippenriemens können in einer Vulkanisationsform mehrere Keilrippenriemen hergestellt werden, indem zunächst ein breiter Riemen hergestellt wird, der anschließend in radialer Richtung zerteilt wird.

Die Erfindung wird nachfolgend anhand eines Ausführungsbeispiels näher erläutert. In der Zeichnung zeigen

Fig. 1: eine Querschnittsansicht einer Vulkanisierform vor der Herstellung eines erfindungsgemäßen Keilrippenriemens,

Fig. 2: die Querschnittsansicht gemäß Fig. 1 während des Zusammenpressens des Geweberohlings und der Kautschukmischung,

Fig. 3: die Querschnittsansicht gemäß Fig. 1 nach der Vulkanisation der Kautschukmischung;

Fig. 4: ein Ausführungsbeispiel für einen erfindungsgemäßen Keilrippenriemen gemäß der vorliegenden Erfindung mit seinen verschiedenen funktionellen Bereichen, die während des Formverfahrens aus den Schichten eines zugehörigen Wickels ausgeformt wurden.

Fig. 5: Versuchsanordnung für die Zwangsschlupfprüfung.

Fig. 6: Diagramm des Gewichtsverlusts erfindungsgemäßer Keilrippenriemen A1 und A2 gegenüber Keilrippenriemen des Standes der Technik C1 und C2 über die Laufzeit.

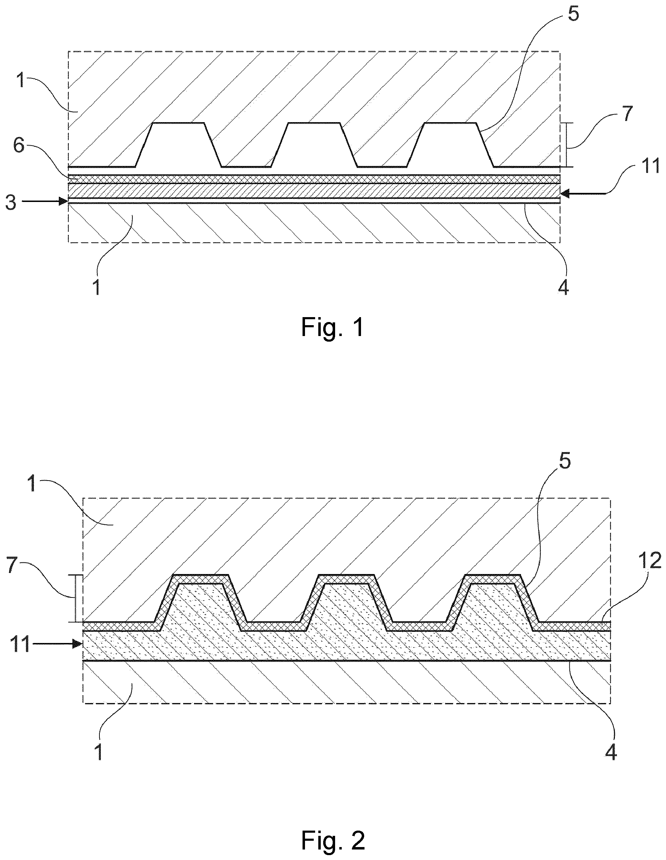

Figur 1 zeigt ein erstes Ausführungsbeispiel einer Vulkanisierform 1 zur Herstellung eines ersten Ausführungsbeispiels eines Keilrippenriemens 2. Die Vulkanisierform 1 bildet einen Ringspalt 3 zwischen einer Rückenwandung 4 und einer Profilwandung 5 der Vulkanisierform 1. Die Rückenwandung 4 und die Profilwandung sind in diesem Sinne als umlaufende Mäntel ausgestaltet, die den Ringspalt begrenzen. Die Vulkanisierform 1 ist dazu eingerichtet, einen Keilrippenriemen herzustellen. Die Profilwandung 5 begrenzt den Ringspalt radial zur Innenseite, die Rückenwandung begrenzt den Ringspalt 3 zu seiner Außenseite.

In die Vulkanisierform 1 ist gemäß einer Ausführungsform des erfindungsgemäßen Verfahrens in einem ersten Schritt ein Geweberohling 6 eingebracht worden, so dass dieser in radialer Richtung vor der Profilwandung 5 angeordnet ist. Der Geweberohling 6 bedeckt in dieser Anordnung die Profilwandung 5, die in einen Profilbereich 7 der Vulkanisierform 1 eingearbeitet ist.

Der Geweberohling 6 weist (nicht im Detail dargestellte) Kettfäden 8 und Schussfäden 9 auf, die dem Geweberohling 6 die Charakteristik eines Gewebes verleihen. Die Kettfäden 8 und die Schussfäden 9 sind hierbei texturiert.

Die Kettfäden 8 haben vorliegend einen Kettfadenmassenanteil von 44 % an der Gesamtmasse des Geweberohlings 6. Die Schussfäden 9 haben einen Schussfadenmassenanteil von 56 % an der Gesamtmasse des Geweberohlings 6.

Der Geweberohling 6 ist hierbei im Sinne eines streifenförmigen Textilrohlings umlaufend in dem Ringspalt 3 angeordnet, wobei die Kettfäden 8 in tangentialer Richtung des Ringspalts 3 umlaufend verlaufen. Die Anordnung des Geweberohlings 6 nahe dem Profilbereich 7 belässt in dem Ringspalt 3 noch einen Zwischenraum zwischen seiner zur Rückenwandung 4 hin orientierten Oberfläche und der Rückenwandung 4.

Weiterhin wird ein Riemenwickel 11 in den Ringspalt der Vulkanisierungsform eingebracht, siehe Figur 2, dieser Riemenwickel 11 umfasst die weiteren Bestandteile des Keilrippenriemens, wie oben ausgeführt, nämlich eine Rückenschicht und eine Kernschicht, wobei diese aus dem vulkanisierbaren Material aufgebaut sein können, sowie eine Zugträgerschicht mit Zugträgern, die in das Rückenschichtmaterial oder das Kernschichtmaterial eingelagert sind.

Diese Riemenwickel sind entsprechend üblicherweise verwendete Riemenwickel, wie sie für andere Keilrippenriemen verwendet werden.

In einer alternativen Ausführungsform (nicht dargestellt) wird der Geweberohling auf der der Rückenschicht gegenüberliegenden Seite als Außenschicht eines Riemenwickels 11 aufgebracht und anschließend dieser mehrschichtige Riemenwickel in die Vulkanisierungsform eingebracht.

Figur 2 zeigt, wie durch diesen sich aufbauenden Formgebungsdruck der Riemenwickel 11 den Geweberohling 6 flächig auf der dem Profilbereich 7 abgewandten Seite anlegt und an den Profilbereich 7 gepresst wird. Hierbei werden die Schussfäden 9 und die Kettfäden 8 gedehnt. Bei Erreichen des Formgebungsdrucks liegt das Gewebe des vorher noch unverformten Geweberohlings 6 an der Profilwandung 5 der Vulkanisierform 1 an. Nach dieser Dehnung und Anpassung an die Profilwandung 5 weist das Gewebe aus Kettfäden 8 und Schussfäden 9 im Wesentlichen schon die Geometrie der Gewebeauflage 12 des zu fertigenden Keilrippenriemens 2 auf. Der Kettfadenmassenanteil und der Schussfadenmassenanteil bleiben bei der Umformung ausgehend von dem Geweberohlings 6 hin zu der Gewebeauflage 12 aufgrund von Massenerhaltung gleich. Die Kettfäden der Gewebeauflage 12 haben daher vorliegend einen Kettfadenmassenanteil von 44 % an der Gesamtmasse der Gewebeauflage 12. Die Schussfäden 9 haben einen Schussfadenmassenanteil von 56 % an der Gesamtmasse der Gewebeauflage.

Durch den Formgebungsdruck dringt ein Teil der Kautschukmischung im Riemenwickel 11 in die Gewebeauflage 12 ein. Dabei durchdringt die Kautschukmischung die Gewebeauflage 12 jedoch nicht vollständig, so dass die Kautschukmischung nicht flächig mit der Profilwandung 5 in Kontakt kommt. Durch das Eindringen in nur einen Teil der Dicke der Gewebeauflage 12 hinterfließt die Kautschukmischung einen Teil der Kettfäden 8 und/oder der Schussfäden 9.

Mit der nach diesem Schritt erreichten Geometrie der Gewebeauflage 12 sowie des Profilbereichs auf der der Profilwandung 5 abgewandten Seite der Gewebeauflage 12 folgt die Vulkanisierung der Kautschukmischung in einem anschließenden Vulkanisierschritt.

Durch den Vulkanisierschritt wird die Kautschukmischung in ein Vulkanisat überführt. Das Vulkanisat weist im Ergebnis elastische Festkörpereigenschaften auf und ist gegenüber der Kautschukmischung nicht mehr zerstörungsfrei plastisch verformbar.

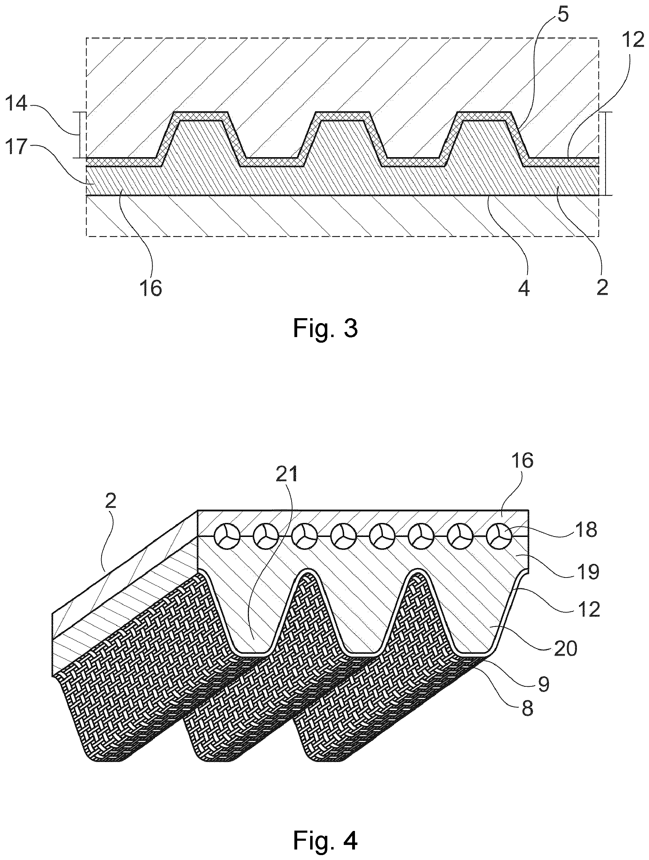

Fig. 3 zeigt die Querschnittsansicht der vorherigen Figuren nach der Herstellung des Vulkanisats durch Vulkanisieren der Kautschukmischung. Die an der Profilwandung 5 abgeformte Geometrie des Keilrippenriemens 2 stellt die Kraftübertragungszone 14 dar, in der ein Kraftübertragungsprofil ausgeformt ist. Im vorliegenden Ausführungsbeispiel ist das Kraftübertragungsprofil als in Umlaufrichtung verlaufende keilförmige Nuten ausgebildet. Auf der der Kraftübertragungszone 14 gegenüber liegenden Seite weist der Keilrippenriemen 2 einen Riemenrücken 16 auf, der an der Rückenwandung 4 abgeformt wurde und vorliegend flach ausgebildet ist. Das Vulkanisat verleiht insoweit dem Grundkörper 17 des Keilrippenriemens 2 dessen Gestalt. Im Anschluss an die Vulkanisation ist der Keilrippenriemen 2 aus der Vulkanisierform 1 entnehmbar und nacharbeitbar, beispielsweise durch Entfernen von überschüssigem Material am axialen Rand des Keilrippenriemens.

In einer nicht dargestellten alternativen Ausführungsform des erfindungsgemäßen Verfahrens wird der Riemenwickel in die Vulkanisierungsform derart eingebracht, dass ein im Riemenwickel vorhandener Geweberohling mit Kettfäden, insbesondere zumindest teilweise texturierte Kettfäden, mit einem Kettfadenmassenanteil und Schussfäden, insbesondere teilweise texturierte Schussfäden, mit einem Schussfadenmassenanteil der größer als der Kettfadenmassenanteil ist, mit eingebracht wird. Dabei wird der Riemenrohling derart in der Vulkanisierungsform angeordnet, dass der Geweberohling an dem Profilbereich angeordnet ist und die Kettfäden in Laufrichtung des herzustellenden Keilrippenriemens orientiert sind. Der Riemenwickel wird durch Formgebungsdruck z.B. durch Druckbeaufschlagung mittels Pressen, an dem Profilbereich angedrückt, derart, dass der Geweberohling sich dabei an die Profilwandung durch Dehnung wenigstens einiger oder aller Kettfäden und durch Dehnung wenigstens einiger oder aller Schussfäden anpasst und die Profilwandung auskleidet. Während des Formgebens und Anpressen des Geweberohlings an dem Profilbereich kann bereits die Vulkanisierung gestartet werden. Üblicherweise erfolgt die Vulkanisierung erst nach Formgebung und Anpressen des Geweberohlings an den Profilbereich.

Figur 4 zeigt ein Ausführungsbeispiel für einen erfindungsgemäßen Keilriemenrippen mit seinen verschiedenen funktionellen Bereichen, die während des Formverfahrens aus den Schichten eines zugehörigen Riemenwickels ausgeformt werden. Während in den Figuren 1 bis 3 lediglich die Kautschukmischung bzw. der Riemenwickel allgemein gezeigt wurde, sind hier nun auch weitere Bestandteile und Bereiche des Riemenkörpers dargestellt. Der dargestellte Riemenkörper besteht im Wesentlichen aus einem oder mehreren elastischen Materialien, im vorliegenden Fall aus einem Kernbereich 19 oder Unterbau auf der Kraftübertragungsseite, häufig auch als Kompressionszone bezeichnet. An diesem Unterbau des Riemenkörpers sind einzelne Keilrippen 20 ausgebildet, im vorliegenden Fall drei Keilrippen. Die Keilrippen besitzen entsprechende Rippenflanken, über die bei Eingriff hier nicht gezeigter Riemenscheiben die Krafteinleitung bzw. Kraftübertragung erfolgt. Die Keilrippen besitzen Rippenspitzen 21, die mehr oder weniger abgeflacht sein können.

Auf der Kompressionsseite, d.h. der der Keilriemenscheibe abgewandten Riemenseite, befindet sich ein Riemenrücken 16, der aus demselben Material wie der Unterbau 19 oder aus einem anderen Elastomer gebildet sein kann. Der Riemenrücken 16 kann soweit gewünscht mehrschichtig sein. In der Abbildung ist der Riemenrücken einschichtig ausgebildet, wobei ein identisches oder ein anderes Elastomermaterial als der Unterbau vorliegen kann. Zwischen dem Unterbau 19 und dem Riemenrücken 16 liegt die Zugträgerschicht 18 aus spiralförmig gewickelten Zugträgern. Die Zugträger sind in diesem Beispiel ohne gesonderte Einbettungslage verarbeitet; eine gesonderte Zugträgereinbettung wäre ebenfalls möglich.

Dargestellt ist die erfindungsgemäße Geweberauflage 12 mit Kettfäden 8 und Schussfäden 9. Wie dargestellt ist die Gewebeauflage dabei aufliegend gegebenenfalls teilweise in das Material eintauchend aber die äußere Schicht und damit die Oberfläche ausbildend.

Die genannten Vorteile konnten im Vergleich zu im Stand der Technik vorbekannten Keilrippenriemen und Verfahren zu deren Herstellung mit den folgenden beispielhaft genannten Prozessbedingungen erzielt werden:

Als Geweberohling kommt ein Textilgewebe zum Einsatz. Als Kettfäden werden z.B. darin Umwindezwirne aus texturierten Polyamidfilamenten und im Kern Polyurethanfilamenten, als Schussfäden Umwirbelungsgarne aus texturierten Polyesterfilamenten und im Kern Polyurethanfilamenten mit dem besagten Kettfadenmassenanteil von 44 % und dem Schussfadenmassenanteil von 56 % verarbeitet.

Der Geweberohling wies vor der Dehnung ein Flächengewicht von 370 g/m$^2$ auf.

Als Kautschukmischung kam eine Kautschukmischung aufweisend EPDM zum Einsatz. Der Formgebungsdruck zum Einbringen in die Vulkanisierform betrug 13 bar. Die Vulkanisierung wurde bei einem Vulkanisierungsdruck von 22 bar und einer Vulkanisierungstempertur von 180 °C für einen Zeitraum von 40 Minuten durchgeführt.

Der hierdurch hergestellte erfindungsgemäße Keilrippenriemen weist einen geringeren Haftreibungskoeffizienten und einen geringeren Gleitreibungskoeffizienten gegenüber dem Stand der Technik auf. Auch konnte eine geringere Geräuscherzeugung im Betrieb beobachtet werden. Die Lebensdauer stellt sich bei dem erfindungsgemäßen Keilrippenriemen ebenfalls vorteilhaft gegenüber den im Stand der Technik bekannten Keilrippenriemen dar. Dieses zeigt sich auch bei der dynamischen Prüfung mittels Dauerlauftest und Zwangsschlupfprüfung. Die Parameter hierzu waren die folgenden:

**Zwangsschlupfprüfung**

- Schlupf zwischen d1 und d3 ca. 5,6 %
- Vorspannkraft 514 N
- Raumtemperatur
- Drehzahl: 2105 U/min
- Scheibendurchmesser: d1=d2=d3=50 mm
- Prüfkriterium: Laufzeit bis Ausfall

  Ausfall: Gewebeablösung, Cordauslösung, Rippenabriss
  Rippenprofil: PK
  Rippenanzahl_ 6
  Riemenlänge: 1026mm.

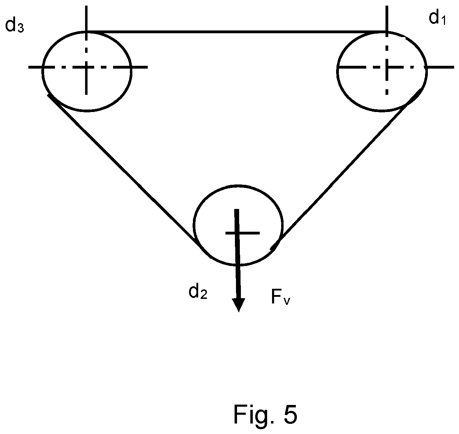

Die entsprechende Anordnung ist in der Figur 5 gezeigt.

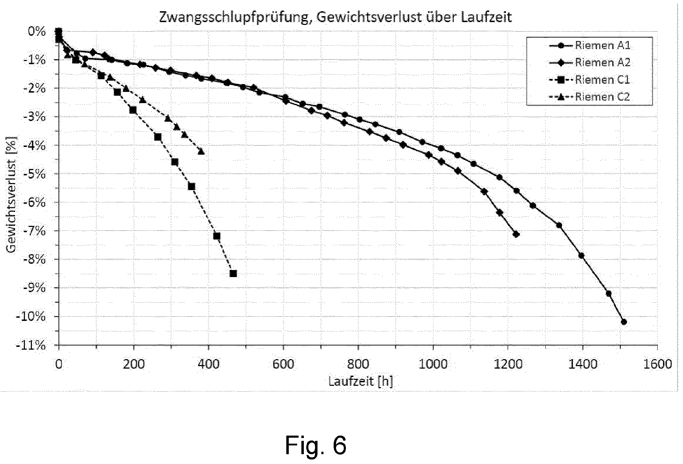

Wie aus der Figur 6 erkennbar zeigen die erfindungsgemäßen Riemen A1 und A2 weniger Gewichtsverlust über die Laufzeit, also die Abriebbeständigkeit ist verbessert. Weiterhin können längere Laufzeiten im Vergleich zu einem Produkt des Standes der Technik (C1, C2) gezeigt werden. Bei diesem Produkt, das im Wesentlichen identisch hergestellt wurde ist das Verhältnis des Kettenfadenmassenanteils zum Schussfadenmassenanteil größer, im Gegensatz zum erfindungsgemäßen Keilrippenriemen.

Diese Riemen C1 und C2 zeigen bei gleicher Laufzeit einen größeren Gewichtsverlust und damit einen höheren Abrieb. Die Laufzeit ist damit deutlich verringert. Es wird davon ausgegangen, dass die Filamente der Kettfäden im Keilrippenriemen stärker mechanisch beansprucht werden als die Filamente der Schussfäden. Daher versagen die Filamente der Kettfäden aufgrund höherer Belastung schneller. Hingegen erlauben die erfindungsgemäßen Keilrippenriemen durch das Verlegen des Textilmaterials in die weniger belastete Querrichtung als Schussfäden eine längere Laufzeit. Es zeigte sich eine Reduzierung des Abriebs, der Reibbeiwert blieb länger stabil und die Lebensdauer wird verlängert.

## Bezugszeichen

| 1 | Vulkanisierform |
| 2 | Keilrippenriemen |
| 3 | Ringspalt |
| 4 | Rückenwandung |
| 5 | Profilwandung |
| 6 | Geweberohling |
| 7 | Profilbereich |
| 8 | Kettfäden |
| 9 | Schussfäden |
| 11 | Riemenwickel |
| 12 | Gewebeauflage |
| 14 | Kraftübertragungszone |
| 16 | Riemenrücken |
| 17 | Grundkörper |
| 18 | Zugträger |
| 19 | Kernbereich/Unterbau |
| 20 | Keilrippen |
| 21 | Keilrippenspitze |

## Patentansprüche

1. Keilrippenriemen, der einen elastischen Grundkörper (17) auf der Basis eines Vulkanisats aufweist, wobei der Grundkörper (17) einen Riemenrücken (16) und eine dem Riemenrücken (16) gegenüberliegende Kraftübertragungszone (14) mit einem Kraftübertragungsprofil aufweist, und wobei in der Kraftübertragungszone (14) eine Gewebeauflage (12) aufliegt, die Kettfäden (8) mit einem Kettfadenmassenanteil und Schussfäden (9) mit einem Schussfadenmassenanteil aufweist, wobei die Kettfäden (8) in einer Laufrichtung des Antriebsriemens verlaufend angeordnet sind, **dadurch gekennzeichnet, dass** der Schussfadenmassenanteil größer als der Kettfadenmassenanteil ist, ein Teil der Kettfäden (8) oder alle Kettfäden (8) als Umwindezwirn mit einem elastischen Kettgarn und einen um dieses herumgewundenen texturierten Hüllgarn ausgebildet sind, einen Teil der Schussfäden (9) oder alle Schussfäden (9) als Umwicklungsgarn mit einem elastischen Kerngarn und einer oder mehrere um dieses herumgewirbelten texturierten Filamenten ausgebildet sind, wobei die Gewebeauflage (12) ein Flächengewicht von mindestens 250 g / m² und von höchsten 1.000 g / m² aufweist.

2. Keilrippenriemen nach Anspruch 1 **dadurch gekennzeichnet, dass** der Schussfadenmassenanteil wenigstens 52 % und der Kettfadenmassenanteil höchstens 48 % beträgt, vorzugsweise der Schussfadenmassenanteil wenigstens 54 % und der Kettfadenmassenanteil höchstens 46 % beträgt, weiter vorzugsweise der Schussfadenmassenanteil wenigstens 55 % beträgt und der Kettfadenmassenanteil höchstens 45 % beträgt, insbesondere der Schussfadenmassenanteil 56 % und der Kettfadenmassenanteil 44 % beträgt.

3. Keilrippenriemen nach einem der Ansprüche 1 bis 2, **dadurch gekennzeichnet, dass** die Gewebeauflage (12) in Kettrichtung und in Schussrichtung elastisch ausgebildet ist, mit einer Reißdehnung in Kettrichtung von wenigstens 110% und mit einer Reißdehnung in Schussrichtung von wenigstens 190%

4. Keilrippenriemen nach einem der Ansprüche 1 bis 3, **dadurch gekennzeichnet, dass** der Teil der Kettfäden (8) oder alle Kettfäden (8) mit dem elastischen Kettgarn als Umwindezwirn aus Polyurethan besteht oder dieses aufweist und wobei das herum gewundene texturierten Hüllgarn aus Polyamid besteht oder dieses aufweist.

5. Keilrippenriemen nach einem der Ansprüche 1 bis 4, **dadurch gekennzeichnet, dass** der Teil des Schussfadens (9) oder alle Schussfäden (9) mit dem elastischen Kerngarn als Umwirbelungsgarn aus Polyurethan besteht oder dieses aufweist und wobei die um dieses herum umwirbelten texturierten ein oder mehrere Filamente aus Polyester besteht oder dieses aufweist.

6. Keilrippenriemen nach einem der Ansprüche 1 bis 5, **dadurch gekennzeichnet, dass** die Gewebeauflage (12) ein Flächengewicht von mindestens 300 g/m² und von höchstens 500 g/m², wie 350 g/m², aufweist.

7. Keilrippenriemen nach einem der Ansprüche 1 bis 6, **dadurch gekennzeichnet, dass** die Bezugsdehnungen der Gewebeauflage (12) in Kettrichtung bei einer Zugkraft von 20 Newton mindestens 16 % beträgt und die Bezugsdehnung der Gewebeauflage in Schussrichtung bei einer Zugkraft von 20 Newton mindestens 73 % beträgt.

8. Keilrippenriemen nach einem der Ansprüche 1 bis 7, **dadurch gekennzeichnet, dass** die Gewebeauflage (12) ohne einen Haftvermittler mit dem Vulkanisat des Grundkörpers in kraftübertragender Weise verbunden ist.

9. Keilrippenriemen nach einem der Ansprüche 1 bis 8, **dadurch gekennzeichnet, dass** das Vulkanisat sich durch einen Teil der Dicke der Gewebeauflage (12) hindurch erstreckt und/oder Filamente der Gewebeauflage (12) auf ihrer dem Grundkörper abgewandten Seite von Vulkanisat hinterflossen sind.

10. Verfahren zur Herstellung eines Keilrippenriemens nach einem der Ansprüche 1 bis 9, wobei eine zur Herstellung des Keilrippenriemens (2) eingerichtete Vulkanisierform (1) einen Profilbereich (7) mit wenigstens einer Profilwandung (5) zur Formung des Kraftübertragungsprofils des Keilrippenriemens (2) aufweist, mit den folgenden Schritten:

a) Anordnen eines Geweberohlings (6) in der Vulkanisierform (1) an dem Profilbereich (7) derart, dass Kettfäden (8) des Geweberohlings in Laufrichtung des herzustellenden Keilrippenriemens (2) verlaufend orientiert sind, wobei der Geweberohling (6) die Kettfäden (8) mit einem Kettfadenmassenanteil und Schussfäden (9 mit einem Schussfadenmassenanteil, der größer als der Kettfadenmassenanteil ist, und ein Teil der Kettfäden (8) oder alle Kettfäden (8) als Umwindezwirn mit einem elastischen Kettgarn und einen um dieses herumgewundenen texturierten Hüllgarn ausgebildet sind, einen Teil der Schussfäden (9) oder alle Schussfäden (9) als Umwicklungsgarn mit einem elastischen Kerngarn und einer oder mehrere um dieses herumgewirbelten texturierten Filamenten ausgebildet sind, wobei die Gewebeauflage (12) ein Flächengewicht von mindestens 250 g / m$^2$ und von höchsten 1.000 g / m$^2$ aufweist.
b) Einbringen eines Riemenwickels (11) in die Vulkanisierungsform auf der der Profilwandung (5) abgewandten Seite des Geweberohlings (6) und Pressen des Riemenwickels (11) mittels eines Formgebungsdruckes derart, dass der Geweberohling (6) an die wenigstens eine Profilwandung (5) angepresst wird, der Geweberohling sich dabei an die Profilwandung (5) durch Dehnung wenigstens einer seiner Kettfäden (8) und durch Dehnung wenigstens einiger oder aller Schussfäden (9) angepasst und die Profilwandung auskleidet mit gegebenenfalls gleichzeitiger oder sich anschließender Vulkanisierung der Kautschukmittel der Kautschukmischung im Riemenwickel (11), oder
alternativ mit den folgenden Schritten:

a') Anordnen eines Riemenwickels (11) mit einem Geweberohling (6) als eine äußere Schicht des Riemenwickels (11), wobei die Anordnung derart ist, dass der Geweberohling (6) an dem Profilbereich (7) angeordnet ist derart, dass Kettfäden (8) des Geweberohlings in Laufrichtung des herzustellenden Keilrippenriemens (2) verlaufend orientiert sind, wobei der Geweberohling (6) die Kettfäden (8) mit einem Kettfadenmassenanteil, Schussfäden (9), mit einem Schussfadenmassenanteil der größer als der Kettfadenmassenanteil ist, und ein Teil der Kettfäden (8) oder alle Kettfäden (8) als Umwindezwirn mit einem elastischen Kettgarn und einen um dieses herumgewundenen texturierten Hüllgarn ausgebildet sind, einen Teil der Schussfäden (9) oder alle Schussfäden (9) als Umwicklungsgarn mit einem elastischen Kerngarn und einer oder mehrere um dieses herumgewirbelten texturierten Filamenten ausgebildet sind, wobei die Gewebeauflage (12) ein Flächengewicht von mindestens 250 g / m2 und von höchsten 1.000 g / m$^2$ aufweist und
b') anschließendem Formgeben durch Druckbeaufschlagung gegebenenfalls bei gleichzeitiger oder sich daran anschließender Vulkanisierung des Riemenwickels.

11. Verfahren nach Anspruch 10, wobei die Kraft zur Bereitstellung des Formgebungsdrucks in Schritt b) wenigstens 10 bar und höchstens 25 bar beträgt.

12. Verfahren nach einem der Ansprüche 10 oder 11, wobei die Vulkanisation bei einer Temperatur von wenigstens 120 °C und höchstens 220 °C, insbesondere bei einer Temperatur 180 °C, durchgeführt wird.

13. Verfahren nach einem der Ansprüche 10 bis 12, wobei in einem vor dem Schritt a) stattfindenden Ausrüstungsschritt ein Waschprozess durchgeführt wird, bei dem ein Gewebekörper, aus dem der Geweberohling (6) hergestellt wird oder der den Geweberohling (6) bildet, nass gewaschen wird, insbesondere von Avivagen, Gleitmittel, Spulöl, Schäröl und/oder Bondierungsmittel befreit wird.

14. Verfahren nach Anspruch 13, **dadurch gekennzeichnet, dass** in dem Ausrüstungsschritt nach dem Waschprozess ein Fixierprozess erfolgt, bei dem der Gewebekörper fixiert wird, um die Elastizität, das Flächengewicht und das Verhältnis Kettfadenmassenanteil zu Schussfadenmasseanteil beizubehalten.

15. Verwendung eines Keilrippenriemens nach einem der Ansprüche 1 bis 9 zur Kraftübertragung zwischen Riemenscheiben in einem Fahrzeug.

## Claims

1. V-ribbed belt which has an elastic base body (17) based on a vulcanizate, the base body (17) having a belt back (16) and a force transmission zone (14) opposite the belt back (16) and having a force transmission profile, and wherein a fabric support (12) rests in the force transmission zone (14), which has warp threads (8) with a warp thread mass fraction and weft threads (9) with a weft thread mass fraction, wherein the warp threads (8) are arranged extending in a running direction of the drive belt, **characterized in that** the weft yarn mass fraction is greater than the warp yarn mass fraction, part of the warp yarns (8) or all of the warp yarns (8) are formed as a wrapped twisted yarn with an elastic warp yarn and a textured cover yarn wound around it, some of the weft yarns (9) or all of the weft yarns (9) are formed as a wrapping yarn with an elastic core yarn and one or more textured filaments twisted around the core yarn, the fabric support (12) having a basis weight of at least 250 g / m$^2$ and at most 1. 000 g / m$^2$.

2. V-ribbed belt according to claim 1, **characterized in that** the weft yarn mass fraction is at least 52% and the warp yarn mass fraction is at most 48%, preferably the weft yarn mass fraction is at least 54% and the warp yarn mass fraction is at most 46%, further preferably the weft yarn mass fraction is at least 55% and the warp yarn mass fraction is at most 45%, in particular the weft yarn mass fraction is 56% and the warp yarn mass fraction is 44%.

3. V-ribbed belt according to one of claims 1 to 2, **characterized in that** the fabric support (12) is elastic in the warp direction and in the weft direction, with an elongation at break in the warp direction of at least 110% and with an elongation at break in the weft direction of at least 190%.

4. V-ribbed belt according to one of claims 1 to 3, **characterized in that** the part of the warp yarns (8) or all warp yarns (8) with the elastic warp yarn as a wrapping yarn consists of or comprises polyurethane and wherein the textured wrapping yarn wound around consists of or comprises polyamide.

5. V-ribbed belt according to one of claims 1 to 4, **characterized in that** the part of the weft yarn (9) or all weft yarns (9) of the elastic core yarn as interlacing yarn consists of or comprises polyurethane and wherein the textured one or more filaments interlaced around this consists of or comprises polyester.

6. V-ribbed belt according to one of claims 1 to 5, **characterized in that** the fabric cover (12) has a basis weight of at least 300 g / m$^2$ and of at most 500 g / m$^2$, such as 350 g / m$^2$.

7. V-ribbed belt according to one of claims 1 to 6, **characterized in that** the reference elongation of the fabric overlay (12) in the warp direction at a tensile force of 20 newtons is at least 16% and the reference elongation of the fabric overlay in the weft direction at a tensile force of 20 newtons is at least 73%.

8. V-ribbed belt according to one of claims 1 to 7, **characterized in that** the fabric overlay (12) is connected to the vulcanizate of the base body in a force-transmitting manner without an adhesion promoter.

9. V-ribbed belt according to one of claims 1 to 8, **characterized in that** the vulcanizate extends through a part of the thickness of the fabric overlay (12) and/or filaments of the fabric overlay (12) have vulcanizate flowing behind them on their side facing away from the base body.

10. Method for producing a multiple V-ribbed belt according to one of claims 1 to 9, wherein a vulcanizing mould (1) set up for producing the multiple V-ribbed belt (2) has a profile region (7) with at least one profile wall (5) for shaping the force transmission profile of the multiple V-ribbed belt (2), comprising the following steps:

   a) Arrangement of a fabric blank (6) in the vulcanizing mould (1) at the profile region (7) in such a way that warp threads (8) of the fabric blank are oriented running in the running direction of the ribbed V-belt (2) to be produced, the fabric blank (6) comprising the warp threads (8) with a warp thread mass fraction and weft threads (9) with a weft thread mass fraction which is greater than the warp thread mass fraction, and some of the warp threads (8) or all of the warp threads (8) are formed as a wrapping yarn with an elastic warp yarn and a texturized cover yarn wound around the latter, some of the weft threads (9) or all of the weft threads (9) are formed as a wrapping yarn with an elastic core yarn and one or more texturized filaments wound around the latter, the fabric support (12) having a basis weight of at least 250 g / m$^2$ and of at most 1,000 g / m$^2$,
   b) introducing a belt wrap (11) into the vulcanization mould on the side of the fabric blank (6) facing away from the profile wall (5) and pressing the belt wrap (11) by means of a shaping pressure in such a way that the fabric blank (6) is pressed against the at least one profile wall (5), the fabric blank adapts to the profile wall (5) by stretching at least one of its warp threads (8) and by stretching at least some or all of the weft threads (9) and lines the profile wall with, if appropriate, simultaneous or subsequent vulcanization of the rubber means of the rubber mixture in the belt wrap (11),
or
alternatively with the following steps:

a') Arrangement of a belt wrap (11) with a fabric blank (6) as an outer layer of the belt wrap (11), the arrangement being such that the fabric blank (6) is arranged at the profile region (7) in such a way that warp yarns (8) of the fabric blank are oriented running in the running direction of the ribbed V-belt (2) to be produced, the fabric blank (6) containing the warp yarns (8) with a warp yarn mass fraction, weft yarns (9) with a weft yarn mass fraction which is greater than the warp yarn mass fraction and some of the warp threads (8) or all of the warp threads (8) are formed as a wrapping yarn with an elastic warp yarn and a texturized cover yarn wound around the latter, some of the weft threads (9) or all of the weft threads (9) are formed as a wrapping yarn with an elastic core yarn and one or more texturized filaments wound around the latter, the fabric support (12) having a basis weight of at least 250 g / m$^2$ and of at most 1. 000 g / m$^2$ and
b') subsequent shaping by pressurization, possibly with simultaneous or subsequent vulcanization of the belt wrap.

**11.** The method according to claim 10, wherein the force for providing the shaping pressure in step b) is at least 10 bar and at most 25 bar.

**12.** Method according to one of claims 10 or 11, wherein the vulcanization is carried out at a temperature of at least 120 °C and at most 220 °C, in particular at a temperature of 180 °C.

**13.** Method according to any one of claims 10 to 12, wherein in a finishing step taking place before step a) a washing process is carried out, in which a fabric body from which the fabric blank (6) is produced or which forms the fabric blank (6) is wet-washed, in particular freed from avivage, lubricant, winding oil, warping oil and/or bonding agent.

**14.** Method according to claim 13, **characterized in that** in the finishing step after the washing process, a fixing process is carried out in which the fabric body is fixed in order to maintain the elasticity, the basis weight and the ratio of warp yarn mass fraction to weft yarn mass fraction.

**15.** Use of a V-ribbed belt according to any one of claims 1 to 9 for power transmission between pulleys in a vehicle.

**Revendications**

**1.** Courroie trapézoïdale à nervures, comprenant un corps de base élastique (17) à base d'un matériau vulcanisé, le corps de base (17) comprenant un dos de courroie (16) et une zone de transmission de force (14) qui est opposée au dos de courroie (16) et qui présente un profil de transmission de force, un support de tissu (12) reposant dans la zone de transmission de force (14), lequel présente des fils de chaîne (8) avec une proportion en masse de fils de chaîne et des fils de trame (9) avec une proportion en masse de fils de trame, les fils de chaîne (8) étant disposés de manière à s'étendre dans un sens de circulation de la courroie trapézoïdale,

**caractérisée en ce que** la proportion en masse de fils de trame est supérieure à la proportion en masse de fils de chaîne,
**en ce qu'**une partie des fils de chaîne (8) ou tous les fils de chaîne (8) sont formés comme un fil retors avec un filé de chaîne élastique et un filé de gaine texturé enroulé autour de celui-ci,
**en ce qu'**une partie des fils de trame (9) ou tous les fils de trame (9) sont formés comme un filé d'enroulement avec un filé d'âme élastique et un ou plusieurs filaments texturés entrelacés autour de celui-ci,
la couche de tissu (12) présentant un grammage de 250 g/m$^2$ au minimum et de 1000 g/m$^2$ au maximum.

**2.** Courroie trapézoïdale à nervures selon la revendication 1,
**caractérisée en ce que** la proportion en masse de fils de trame est de 52 % au minimum, et la proportion en masse de fils de chaîne est de 48 % au maximum, de préférence la proportion en masse de fils de trame est de 54 % au minimum, et la proportion en masse de fils de chaîne est de 46 % au maximum, de préférence encore la proportion en masse de fils de trame est de 55 % au minimum, et la proportion en masse de fils de chaîne est de 45 % au maximum, en particulier la proportion en masse de fils de trame est de 56 %, et la proportion en masse de fils de chaîne est de 44 %.

**3.** Courroie trapézoïdale à nervures selon l'une des revendications 1 à 2, **caractérisée en ce que** le support de tissu (12) est élastique dans le sens de la chaîne et dans le sens de la trame, avec un allongement à la rupture dans le sens de la chaîne d'au moins 110 % et avec un allongement à la rupture dans le sens de la trame d'au moins 190 %.

**4.** Courroie trapézoïdale à nervures selon l'une des revendications 1 à 3, **caractérisée en ce que** la partie des fils de chaîne (8) ou tous les fils de chaîne (8) avec le filé de chaîne élastique en tant que fil retors comprennent ou sont constitués de polyuréthane, et le filé de gaine texturé enroulé autour de celui-ci comprend ou est constitué de polyamide.

5. Courroie trapézoïdale à nervures selon l'une des revendications 1 à 4, **caractérisée en ce que** la partie des fils de trame (9) ou tous les fils de trame (9) avec le filé d'âme élastique comme fil d'entrelacement comprennent ou sont constitués de polyuréthane, et ledit ou lesdits filaments texturés entrelacés autour de celui-ci comprennent ou sont constitués de polyester.

6. Courroie trapézoïdale à nervures selon l'une des revendications 1 à 5, **caractérisée en ce que** le support en tissu (12) présente un grammage de 300 g/m$^2$ au minimum et de 500 g/m$^2$ au maximum, par exemple de 350 g/m$^2$.

7. Courroie trapézoïdale à nervures selon l'une des revendications 1 à 6, **caractérisée en ce que** les allongements de référence du support en tissu (12) dans le sens de la chaîne sont d'au moins 16 % pour une force de traction de 20 Newtons, et l'allongement de référence du support en tissu dans le sens de la trame est d'au moins 73 % pour une force de traction de 20 Newtons.

8. Courroie trapézoïdale à nervures selon l'une des revendications 1 à 7, **caractérisée en ce que** le support en tissu (12) est relié avec transmission des forces au matériau vulcanisé du corps de base en étant exempt d'agent adhésif.

9. Courroie trapézoïdale à nervures selon l'une des revendications 1 à 8, **caractérisée en ce que** le matériau vulcanisé s'étend à travers une partie de l'épaisseur du support en tissu (12), et/ou **en ce que** des filaments du support en tissu (12) sont recouverts par le matériau vulcanisé, sur sa face opposée au corps de base.

10. Procédé de fabrication d'une courroie trapézoïdale à nervures selon l'une des revendications 1 à 9,

dans lequel un moule de vulcanisation (1) conçu pour la fabrication de la courroie trapézoïdale à nervures (2) présente une zone à profil (7) ayant au moins une paroi profilée (5) pour former le profil de transmission de force de la courroie trapézoïdale à nervures (2), comprenant les étapes suivantes consistant à :

a) agencer une ébauche en tissu (6) dans le moule de vulcanisation (1) au niveau de la zone à profil (7), de telle sorte que des fils de chaîne (8) de l'ébauche en tissu soient orientés de manière à s'étendre dans le sens de circulation de la courroie trapézoïdale à nervures (2) à fabriquer, l'ébauche en tissu (6) présentant les fils de chaîne (8) avec une proportion en masse de fils de chaîne et les fils de trame (9) avec une proportion en masse de fils de trame qui est supérieure à la proportion en masse de fils de chaîne, et une partie des fils de chaîne (8) ou tous les fils de chaîne (8) étant formés comme un fil retors avec un filé de chaîne élastique et un filé de gaine texturé enroulé autour de celui-ci, une partie des fils de trame (9) ou tous les fils de trame (9) étant formés comme un filé d'enroulement avec un filé d'âme élastique et un ou plusieurs filaments texturés entrelacés autour de celui-ci, le support en tissu (12) présentant un grammage de 250 g/m$^2$ au minimum et de 1000 g/m$^2$ au maximum,

b) introduire un enroulement de courroie (11) dans le moule de vulcanisation sur le côté de l'ébauche en tissu (6) opposé à la paroi profilée (5), et presser l'enroulement de courroie (11) au moyen d'une pression de mise en forme de telle sorte que l'ébauche en tissu (6) est pressée contre ladite au moins une paroi profilée (5), l'ébauche en tissu s'adaptant alors à la paroi profilée (5) par allongement de l'un au moins de ses fils de chaîne (8) et par allongement de quelques-uns au moins ou de tous les fils de trame (9), et revêtant la paroi profilée, le cas échéant, faire vulcaniser simultanément ou consécutivement les agents de caoutchouc du mélange de caoutchouc dans l'enroulement de courroie (11),

ou, en variante, comprenant les étapes suivantes consistant à :

a') agencer un enroulement de courroie (11) avec une ébauche en tissu (6) en tant que couche extérieure de l'enroulement de courroie (11), l'agencement étant tel que l'ébauche en tissu (6) est agencée au niveau de la zone à profil (7) de telle sorte que les fils de chaîne (8) de l'ébauche en tissu sont orientés de manière à s'étendre dans le sens de circulation de la courroie trapézoïdale à nervures (2) à fabriquer, l'ébauche en tissu (6) comprenant les fils de chaîne (8) avec une proportion en masse de fils de chaîne, les fils de trame (9) avec une proportion en masse de fils de trame qui est supérieure à la proportion en masse de fils de chaîne, et une partie des fils de chaîne (8) ou tous les fils de chaîne (8) étant formés comme un fil retors avec un filé de chaîne élastique et un filé de gaine texturé enroulé autour de celui-ci, une partie des fils de trame (9) ou tous les fils de trame (9) étant formés comme un filé d'enroulement avec un filé d'âme élastique et un ou plusieurs filaments texturés entrelacés autour de celui-ci, le support en tissu (12) présentant un grammage de 250 g/m$^2$ au minimum et de 1000 g/m$^2$ au maximum,

b') puis, mettre en forme l'enroulement de courroie par mise sous pression, le cas échant avec vulcanisation simultanée ou consécutive de l'enroulement de courroie.

**11.** Procédé selon la revendication 10, dans lequel la force pour fournir la pression de mise en forme à l'étape b) est de 10 bars au minimum et de 25 bars au maximum.

**12.** Procédé selon l'une des revendications 10 ou 11, dans lequel la vulcanisation est réalisée à une température de 120 °C au minimum et de 220 °C au maximum, en particulier à une température de 180 °C.

**13.** Procédé selon l'une des revendications 10 à 12, dans lequel, dans une étape d'apprêtage préalable à l'étape a), un processus de lavage est effectué, au cours duquel un corps en tissu, à partir duquel l'ébauche en tissu (6) est fabriquée ou qui constitue l'ébauche en tissu (6), est lavé par voie humide, en particulier en étant débarrassé des agents d'avivage, du lubrifiant, de l'huile de bobinage, de l'huile d'ourdissage et/ou des agents de liaison.

**14.** Procédé selon la revendication 13, **caractérisé en ce que**, dans l'étape d'apprêtage, après le processus de lavage, un processus de fixation est effectué, au cours duquel le corps en tissu est fixé afin de conserver l'élasticité, le grammage et le rapport entre la proportion en masse de fils de chaîne et la proportion en masse de fils de trame.

**15.** Utilisation d'une courroie trapézoïdale à nervures selon l'une des revendications 1 à 9 pour la transmission de force entre des poulies dans un véhicule.

EP 3 822 399 B1

Fig. 1

Fig. 2

17

Fig. 3

Fig. 4

$d_3$           $d_1$

$d_2$     $F_v$

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2545296 B1
- DE 69101598 T2
- DE 102011053679 A1
- US 6685785 B1
- EP 3139063 A1